(19) Europäisches Patentamt
European Patent Office
Office européen des brevets

(11) EP 3 741 790 A1

(12) EUROPÄISCHE PATENTANMELDUNG

(43) Veröffentlichungstag:
**25.11.2020 Patentblatt 2020/48**

(21) Anmeldenummer: **19175334.2**

(22) Anmeldetag: **20.05.2019**

(51) Int Cl.:
***C08G 69/14*** *(2006.01)* ***C08G 69/36*** *(2006.01)*
***B29C 45/00*** *(2006.01)*

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**KH MA MD TN**

(71) Anmelder: **Evonik Operations GmbH**
**45128 Essen (DE)**

(72) Erfinder:
- **WEINELT, Frank**
  **48727 Billerbeck (DE)**
- **BAUMANN, Franz-Erich**
  **48249 Dülmen (DE)**
- **KOSSMANN, Janina**
  **14469 Potsdam (DE)**

(74) Vertreter: **Evonik Patent Association**
**c/o Evonik Industries AG**
**IP Management**
**Bau 1042A/PB 15**
**Paul-Baumann-Straße 1**
**45772 Marl (DE)**

# (54) POLYAMIDE MIT CYCLISCHEN TERPENOIDEN SUBSTRUKTUREN

(57) Es werden Polyamide beansprucht, die mindestens 10 Gew.-% mindestens einer cyclischen terpenoiden Substruktur enthalten. Die Substruktur ist bevorzugt von einem Monoterpen abgeleitet. Des Weiteren werden ein Verfahren zur Herstellung der Polyamide sowie Formmassen beschrieben. Die Formmassen enthalten 10 bis 90 Gew.-% dieser Polyamide.

EP 3 741 790 A1

Printed by Jouve, 75001 PARIS (FR)

**Beschreibung**

Die vorliegende Erfindung betrifft Polyamide, die cyclische terpenoide Substrukturen enthalten.

Um fossile Ressourcen zu schonen und den Ausstoß von Treibhausgasen zu reduzieren, besteht großes Interesse daran, konventionelle Kunststoffe durch solche zu ersetzen, die aus nachwachsenden Rohstoffen hergestellt werden können. Polyamidekönnen sowohl aus Kondensation von Diaminen mit Dicarbonsäuren als auch Aminosäuren oder Lactamen hergestellt werden. Bei letzteren liegen mit der Aminogruppe und der Carboxylgruppe beide zur Verknüpfung benötigten funktionellen Gruppen im gleichen Molekül vor.

Lactame von Campher und Menthon wurden in der Literatur beschrieben (Kumar, Med. Chem. Res. 2012, Seite 531). Auch die Lactame aus α-Pinen und 3-Caren sind literaturbekannt (R. E. Gawley, Org. React. 1988, 35, 1). Lochinski et al. (Tetrahedron: Asymmetry, 2000, 11, 1295) offenbart das Lactam aus 3-Caren und die daraus hergestellte ringgeöffnete Aminocarbonsäure.

DE102014221061A1 offenbart die Verwendung mindestens eines Terpenlactams zur Herstellung von Polyamiden. In der Anmeldung ist ein Beispiel ausgehend von Campherlactam offenbart, welches mit ε-Caprolactam zu einem Copolymer umgesetzt werden sollte. Hierbei wird eine gewisse Menge Natriumlactamat (als sogenannter Katalysator) und eine kleine Menge an Acyl-Caprolactam (als sogenannter Aktivator) eingesetzt. Aus dem entstandenen Polymer wurden nicht umgesetzte Restmonomere bestimmt. Die Masse an Campher-basiertem Lactam in den Restmonomeren übertraf die Menge an eingesetzten Campherlactam (incl. dem Natriumlactamat) geringfügig. Es ist kein Vergleichsbespiel ohne Campherlactam angeführt, es sind auch keine Eigenschaften des Produktes offenbart. Der Fachmann muss aufgrund dieser Offenbarung davon ausgehen, dass das Campherlactam an der Polyamidbildung nicht beteiligt war.

Ein ähnliches Verfahren wird von Winnacker (Macromol. Chem. Phys., 2014 (215, 1654-1660: Synthesis of Novel Sustainable Oligoamides via Ring-Opening Polymerization of Lactams Based on (-)-Menthone) unter Verwendung von Menthonlactam unter Verwendung von Benzoylchlorid und Natrium Lactamat offenbart. MALDI-TOF Spektren zeigen die Bildung von niedermolekularen Oligomeren des Menthonlactams.

Alle Reaktionsprodukte nach DE102014221061A1 und Winnacker sind am N-Terminus mit einer Acylgruppe substituiert, im Falle von DE102014221061A1 stammt die Acylgruppe aus dem eingesetzten Acyl-Caprolactam, im Falle von Winnacker aus dem eingesetzten Benzoylchlorid. Floyd (Reinhold Plastics Applications Series: Polyaminde Resins, 2. Aufl., 1966, Seite 59/60) offenbart diverse Methoden zur Herstellung von Polyamid 6 (Nylon-6). In einer dieser Methoden wird ein Nylon-6,6 Salz in einer Aufzählung von Initiatoren offenbart. Ein Zweck oder ein Ergebnis dieser Verwendung ist nicht offenbart worden.

Es ist somit Aufgabe der vorliegenden Erfindung, Polyamide, die cyclische terpenoide Substrukturen enthalten, bereitzustellen, wobei die Substrukturen in ihrer Ausdehnung durch die Stickstoffatome der Amidgruppen begrenzt werden.

Gegenstand der vorliegenden Erfindung sind Polyamide enthaltend mindestens 10 Gew.-% mindestens einer cyclischen terpenoiden Substruktur, wobei die Substruktur bevorzugt von einem Monoterpen abgeleitet ist.

Ein weiterer Gegenstand der vorliegenden Erfindung ist ein Verfahren zur Herstellung der erfindungsgemäßen Polyamide.

Ein weiterer Gegenstand der vorliegenden Erfindung sind Formmassen enthaltend 10 bis 90 Gew.-% mindestens eines erfindungsgemäßen Polyamids.

Ein weiterer Gegenstand der Erfindung ist ein geformter Gegenstand, hergestellt aus der erfindungsgemäßen Formmasse. Vorzugsweise ist der geformte Gegenstand ein Formteil, eine Folie, eine Borste, eine Faser oder ein Schaum. Der geformte Gegenstand kann beispielsweise hergestellt werden durch Pressen, Schäumen, Extrusion, Coextrusion, Blasformen, 3D-Blasformen, Coextrusionsblasformen, Coextrusions-3D-Blasformen, Coextrusions-Saugblasformen oder Spritzgießen. Dem Fachmann sind derartige Verfahren bekannt.

Ein weiterer Gegenstand der Erfindung stellt die Verwendung des erfindungsgemäßen geformten Gegenstands dar, welcher beispielsweise als Faserverbundbauteil, Schuhsohle, Oberbeläge von Skiern oder Snowboards, Medienleitung, Brillengestell, Designartikel, Dichtungsmaterial, Körperschutz (Body Protection), Dämmstoff oder foliertes Gehäuseteil genutzt werden kann.

Die erfindungsgemäßen Polyamide, die Zusammensetzungen und Formmassen enthaltend die erfindungsgemäßen Formmassen, sowie das erfindungsgemäße Verfahren und die erfindungsgemäße Verwendung werden nachfolgend beispielhaft beschrieben, ohne dass die Erfindung auf diese beispielhaften Ausführungsformen beschränkt sein soll. Sind nachfolgend Bereiche, allgemeine Formeln oder Verbindungsklassen angegeben, so sollen diese nicht nur die entsprechenden Bereiche oder Gruppen von Verbindungen umfassen, die explizit erwähnt sind, sondern auch alle Teilbereiche und Teilgruppen von Verbindungen, die durch Herausnahmen von einzelnen Werten (Bereichen) oder Verbindungen erhalten werden können. Werden im Rahmen der vorliegenden Beschreibung Dokumente zitiert, so soll deren Inhalt vollständig zum Offenbarungsgehalt der vorliegenden Erfindung gehören. Werden nachfolgend %-Angaben gemacht, so handelt es sich, wenn nicht anders angegeben, um Angaben in Gewichts-%. Bei Zusammensetzungen beziehen sich die %-Angaben, wenn nicht anders angegeben auf die Gesamtzusammensetzung. Werden nachfolgend

Mittelwerte angegeben, so handelt es sich, wenn nicht anders angegeben, um Massenmittel (Gewichtsmittel). Werden nachfolgend Messwerte angegeben, so wurden diese Messwerte, wenn nicht anders angegeben, bei einem Druck von 101325 Pa und einer Temperatur von 25 °C ermittelt.

Im Schutzumfang liegen im kommerziellen Handeln übliche Konfektionierungen und Abpackungen der erfindungsgemäßen Produkte sowohl als solche, als auch in eventuellen Zerkleinerungsformen soweit diese nicht in den Ansprüchen definiert sind.

Die gegebenenfalls verschiedenen Einheiten des Polyamides sind statistisch verteilt. Statistische Verteilungen sind blockweise aufgebaut mit einer beliebigen Anzahl an Blöcken und einer beliebigen Sequenz oder sie unterliegen einer randomisierten Verteilung, sie können auch alternierend aufgebaut sein oder auch über die Polymerkette einen Gradienten bilden, insbesondere können sie auch alle Mischformen bilden, bei denen gegebenenfalls Gruppen unterschiedlicher Verteilungen aufeinander folgen können. Spezielle Ausführungen können dazu führen, dass die statistischen Verteilungen durch die Ausführung Beschränkungen erfahren. Für alle Bereiche, die nicht von der Beschränkung betroffen sind, ändert sich die statistische Verteilung nicht.

Ein Vorteil der erfindungsgemäßen Polyamide ist, dass sie transparent sind.

Ein weiterer Vorteil der erfindungsgemäßen Polyamide ist, dass sie einen erheblichen Massenanteil aus nachwachsenden Rohstoffen enthalten.

Ein weiterer Vorteil der erfindungsgemäßen Polyamide ist der verringerte Gehalt an Restmonomeren.

Unter Restmonomeren wird im Umfang der vorliegenden Erfindung der niedermolekulare Anteil mit einer molaren Masse kleiner als 500 g/mol bezeichnet. Die Messungen wurden mittels GPC wie in den Beispielen erläutert durchgeführt. Gehaltsangaben sind Gew.-%.

Ein weiterer Vorteil ist die Einstellbarkeit der Eigenschaften von Copolyamiden basierend auf bicyclischen Terpenlactamen. Insbesondere weisen die Produkte der Polymerisation von Pinenlactam außergewöhnlich hohe Glasübergangstemperaturen auf.

Monoterpene sind dem Fachmann bekannt als Kohlenwasserstoffstrukturen, die 10 Kohlenstoffatome enthalten. Die cyclischen terpenoiden Substrukturen können gegebenenfalls eine Doppelbindung enthalten. Bevorzugt weisen die erfindungsgemäßen Polyamide in ihrer cyclischen terpenoiden Substruktur dreigliedrige, viergliedrige und / oder fünfgliedrige Ringe auf.

Bevorzugt enthält die cyclische terpenoide Substruktur einen Ring, welcher bevorzugt geminal zwei Methylgruppen aufweist. Der Ring stellt mehr bevorzugt ein 1,1-Dimethyl-cyclopropan, 1,1-Dimethyl-cyclobutan oder 1,1-Dimethyl-cyclopentan dar, sowie gegebenenfalls Gemische dieser Ringe. Die 1,1-Dimethyl-substituierten Ringe weisen ausschließlich in $\alpha$ und $\alpha'$-Position die Substituenten der Polymer bildenden Kette auf, also in beiden geminalen Positionen des dimethylsubstituierten Ringglieds, an deren Ende die funktionellen Gruppen zur Ausbildung der Amidgruppen angeordnet sind. Dem Fachmann ist bekannt, dass die in ihrer Position noch nicht definierten Gruppen so angeordnet sein müssen, dass durch formales Zerschneiden der beanspruchten Substruktur zwei formale isoprenoide Einheiten entstehen.

Bevorzugt enthalten die erfindungsgemäßen Polyamide 1 bis 1000 ppm einer Phosphor enthaltenden Komponente, diese Komponente kann anorganischer oder organischer Natur sein, bevorzugt ist die anorganische Komponente eine anorganische Säure, mehr bevorzugt Hypophosphorige Säure. Mehr bevorzugte enthalten die Polyamide 2 bis 100 ppm, weiter mehr bevorzugt 5 bis 60 ppm, wobei sich die Gehaltsangaben auf die Gesamtmasse der Polyamide bezieht.

Bevorzugt weisen die erfindungsgemäßen Polyamide einen Restmonomerengehalt von 3 bis 20 Gew.-%, bevorzugt 5 bis 15 Gew.-%, mehr bevorzugt 7 bis 13 Gew.-% der Gesamtmasse der Polyamide auf.

Bevorzugt weisen die erfindungsgemäßen Polyamide eine Molmasse (Anzahl Wiederholungseinheiten) von mindestens 3500 g/mol auf. Mehr bevorzugt weist das Polyamid eine Molmasse von mindestens 3500 g/mol und einen Anteil von mindestens 50 Gew.-% bestehend aus einer cyclischen terpenoiden Substruktur, wobei der Cyclus 4 Ringlieder aufweist. Mehr bevorzugt weist das Polyamid mindestens 60 Gew.-%, insbesondere mindestens 70 Gew.-% und höchstens 95 Gew.-%, bevorzugt höchstens 90 Gew.-%, insbesondere bevorzug höchstens 85 Gew.-% der cyclischen terpenoiden Substruktur mit 4 Ringliedern auf.

Bevorzugt weisen die erfindungsgemäßen Polyamide eine Molmasse (Anzahl Wiederholungseinheiten) von mindestens 8000 g/mol auf, bevorzugt mindestens 9000 g/mol, insbesondere bevorzugt mindestens 10000 g/mol. Mehr bevorzugt weist das Polyamid eine Molmasse von mindestens 8000 g/mol und einen Anteil von mindestens 50 Gew.-% bestehend aus einer cyclischen terpenoiden Substruktur, wobei der Cyclus 3 Ringlieder aufweist. Mehr bevorzugt weist das Polyamid mindestens 60 Gew.-%, insbesondere mindestens 70 Gew.-% und höchstens 95 Gew.-%, bevorzugt höchstens 90 Gew.-%, insbesondere bevorzug höchstens 85 Gew.-% der cyclischen terpenoiden Substruktur mit 3 Ringliedern auf.

Die Molmassen der vorliegenden Erfindung sind zahlenmittlere Molmassen (Mn) und können nach dem Stand der festgestellt werden, bevorzugt werden die Molmassen mittels GPC oder über die Bestimmung der Endgruppen bestimmt, mehr bevorzugt über GPC.

Bevorzugt enthält das erfindungsgemäße Polyamid neben der cyclischen terpenoiden Substruktur mindestens eine Einheit eines Polyamides K.L und/oder M, wobei die Summe der Einheiten aus K + L + M mindestens 2 ist. Die Einheit K leitet sich aus einem Diamin ab, L von einer Disäure und M von einer Aminosäure. Das erfindungsgemäße Polyamid ist damit ein Copolyamid.

Bevorzugt beträgt der Anteil an Polyamidstrukturen aus K.L und/oder M von 1 bis zu 90 Gew.-%, bevorzugt von 2 bis 75 Gew.-%, mehr bevorzugt von 3 bis 60 Gew.-%, weiter mehr bevorzugt von 5 bis 50 Gew.-%, besonders bevorzugt von 10 bis 30 Gew.-% und insbesondere von 15 bis 25 Gew.-%.

Bevorzugt weisen die erfindungsgemäßen Polyamide eine Glasübergangstemperatur größer oder gleich 100 °C, bevorzugt 105 °C, mehr bevorzugt 110 °C auf.

Bevorzugt weist das erfindungsgemäße Polyamid einen Restmonomergehalt von kleiner oder gleich 15 Gew.-%, 13 Gew.-%, 12 Gew.-%, 11 Gew.-%, insbesondere bevorzugt kleiner oder gleich 10 Gew.-%.

Bevorzugt weist das erfindungsgemäße Polyamid als cyclische terpenoide Substruktur zu mindestens 10 mol-% eine cyclische terpenoide Substruktur mit einem Vierring auf, wobei die Gehaltsangabe sich auf das gesamte Polyamid bezieht. Bevorzugt weist das erfindungsgemäße Polyamid mindestens 15 mol-%, mindestens 20, 30, 40, 50, 60, 70, 80, 85, 90 und insbesondere bevorzugt 95 mol-% der cyclischen terpenoiden Substruktur mit einem Vierring auf.

Bevorzugt weist das erfindungsgemäße Polyamid, enthaltend mindestens 10 Gew.-% mindestens einer cyclischen terpenoiden Substruktur und den Polyamidstrukturen K.L und/oder M, keine weiteren Polyamide auf.

Das erfindungsgemäße Polyamid weist bevorzugt Wiederholungseinheiten ausgewählt aus den folgenden cyclischen terpenoiden Substrukturen auf:

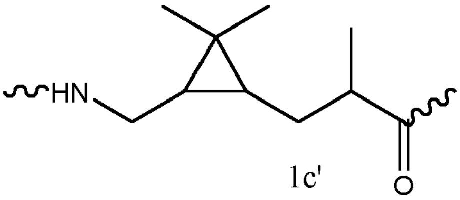
1c'

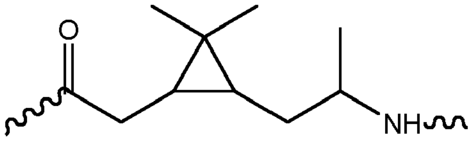
1c''

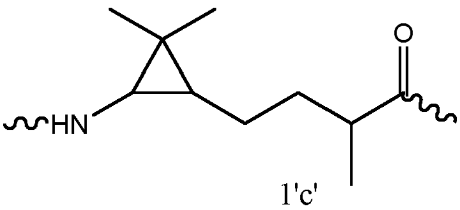
1'c'

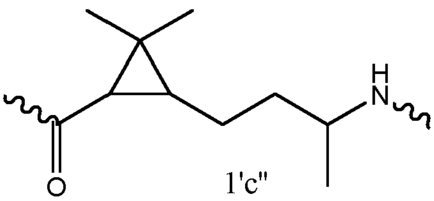
1'c''

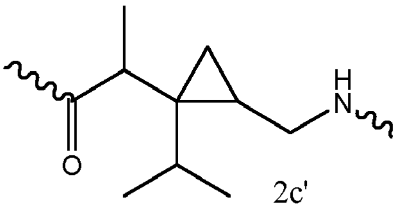
2c'

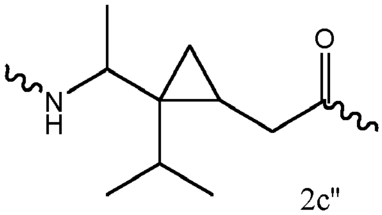
2c''

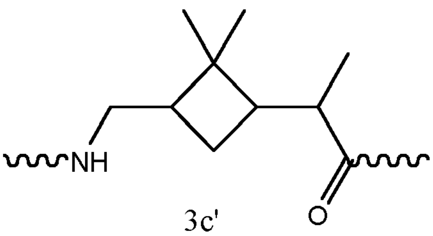
3c'

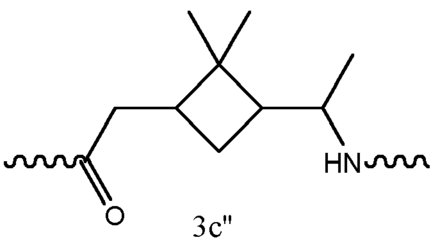
3c''

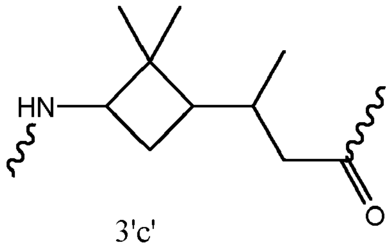

3'c'

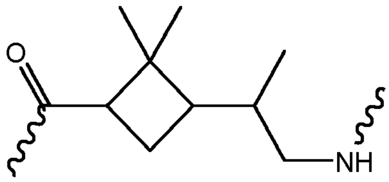

3'c''

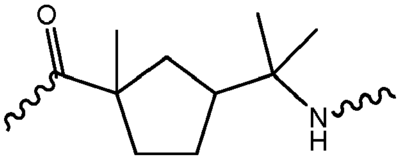

4c'

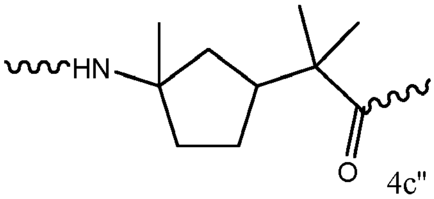

4c''

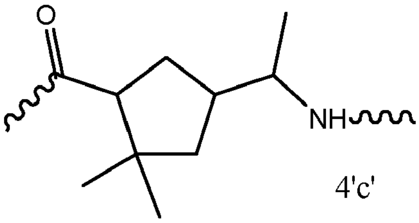

4'c'

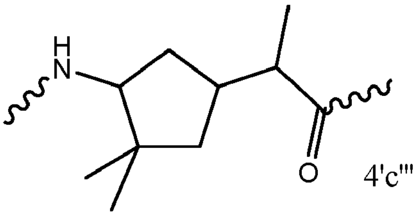

4'c'''

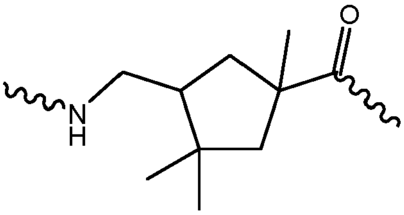

4''c'

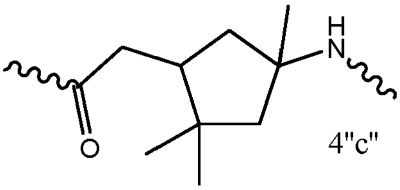

4''c''

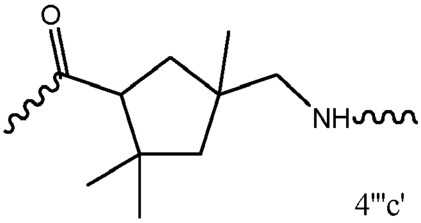

4'''c'

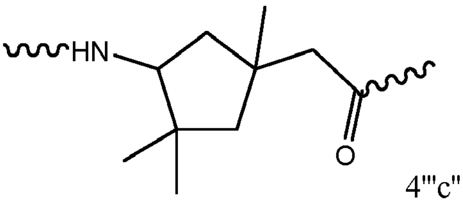

4'''c''

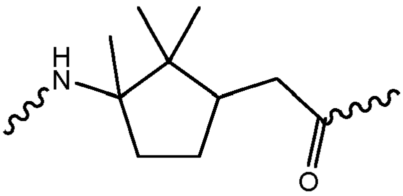

5c'

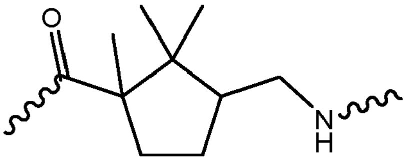

5c''

Bevorzugt sind die Substrukturen 1c', 1c'', 1'c', 1'c'', 3c', 3c'', 3'c', 3'c'', 5c' und 5c''. Insbesondere bevorzugt sind die Substrukturen 1c', 1c'', 3c' und 3c''.

Die erfindungsgemäßen Polyamide können nach dem Stand der Technik hergestellt werden, bevorzugt jedoch nach dem erfindungsgemäßen Verfahren, welches die folgenden Schritte umfasst:

a) Bereitstellen mindestens eines bicyclischen Terpenlactams,

b) Polymerisieren des mindestens einen bicyclischen Terpenlactams unter Ringöffnung, sodass ein Polyamid, bevorzugt ein Homopolyamid oder ein Copolyamid, erhalten wird.

Bevorzugt werden im Schritt a) bicyclische Terpenlactame, die neben dem Lactamring einen Dreiring, einen Vierring oder einen Fünfring aufweisen.

Schritt b) wird bevorzugt durch Zugabe einer Phosphor-haltige Säure, mehr bevorzugt Hypophosphorige Säure durchgeführt. Bevorzugt wird eine Menge von 2 bis 500 ppm eingesetzt, mehr bevorzugt von 10 bis 200 ppm, besonders bevorzugt von 20 bis 100 ppm, insbesondere bevorzugt von 30 bis 60 ppm eingesetzt. Die Gehaltsangaben beziehen sich auf die Gesamtmasse der eingesetzten Monomeren.

Schritt b) wird bevorzugt bei "niedriger" Temperatur, bevorzugt unter 270 °C, mehr bevorzugt unter 260 °C, 255 °C, 250 °C, 245 °C und mindestens bei 240 °C durchgeführt.

Die Reaktionszeit in Schritt b) bei einer Temperatur von mindestens 240 °C wird bevorzugt "nicht zu lange" gehalten, bevorzugt bis zu 10 Stunden, 8, 7, 6, 5, 4; mit einem Minimum von 2 Stunden.

Der sich bei den Reaktionstemperaturen einstellende Druck ("hoher Druck") in Schritt b) wird bevorzugt über 10 bis 90 % der Reaktionszeit aufrecht erhalten, dann wird der Druck gegenüber der Umgebung abgebaut und die restliche Reaktionszeit bei einem Druck von 1 bis 1,2 bar belassen. Mehr bevorzugt wird der hohe Druck 20 bis 80 %, besonders bevorzugt 30 bis 70 % und insbesondere bevorzugt 40 bis 60 % aufrecht erhalten.

Bevorzugt wird in Schritt b) ein Mediator eingesetzt, der in das erfindungsgemäße Polyamid einreagiert.

Bevorzugt eingesetzte Mediatoren sind ein Nylonsalze oder $\alpha,\omega$-Aminosäure (als intramolekulares Salz). Der Mediator wird bevorzugt in einer Menge von maximal 25 Gew.-%, 20 Gew.-%, 15 Gew.-%, 10 Gew.-%, 5 Gew.-%, insbesondere bevorzugt 5 bis 17 Gew.-%, 8 bis 15 Gew.-%, 9 bis 13 Gew.-% bezogen auf die Menge an eingesetzten Monomeren, insbesondere bevorzugt bezogen auf die Mengen an bicyclischen Terpenlactamen eingesetzt.

Das Nylonsalz besteht aus einer $\alpha,\omega$-Diammonium- und einer $\alpha,\omega$-Dicarboxylat-Verbindung, bevorzugt ist das Nylonsalz aliphatisch. Bevorzugt ist die Diammonium-Verbindung nicht linear, mehr sind Diammonium-Verbindungen mit mehr als 6 bis zu 25 Kohlenstoffatomen. Mehr bevorzugt sind Diammonium-Verbindungen, die mindestens eine Ringstruktur aufweisen. Insbesondere bevorzugt sind Diammonium-Verbindungen, die eine PACM (4,4'-Methylenbis[caclohexanamin]) Struktur aufweisen. Bevorzugt sind Dicarboxylat-Verbindungen mit als 6 bis zu 25 Kohlenstoffatomen. Insbesondere bevorzugt sind Diammonium-Verbindungen mit mindestens einer Ringstruktur und Dicarboxylat-Verbindungen mit als 6 bis zu 25 Kohlenstoffatomen.

Im Zusammenhang mit der vorliegenden Erfindung wird unter dem Begriff "Terpenlactam" eine chemische Verbindung verstanden, die mindestens ein bicyclisches System aufweist, wobei ein Ring eine Amid-Bindung -NH-CO-enthält.

Wo immer Moleküle beziehungsweise Molekülfragmente ein oder mehrere Stereozentren aufweisen oder aufgrund von Symmetrien in Isomere unterschieden werden können oder aufgrund anderer Effekte z.B. eingeschränkter Rotation in Isomere unterschieden werden können, sind alle möglichen Isomere von der vorliegenden Erfindung mit eingeschlossen.

Isomere sind dem Fachmann bekannt, in besonderer Weise wird auf die Definitionen von Prof. Kazmaier der Universität des Saarlandes verwiesen, z. B. http://www.uni-saarland.de/fak8/kazmaier/PDF_files/vorlesungen/Stereochemie%20Strassb%20Vorlage.pdf. Sofern im Umfang dieser Erfindung auf Naturstoffe Bezug genommen wird, z. B. Pinen, sind grundsätzlich alle Isomeren damit gemeint, bevorzugt sind die jeweils in der Natur vorkommenden Isomere, im hier genannte Falle also das $\alpha$-Pinen.

Zur Definition von Naturstoffen wird auf den Umfang des "Dictionary of Natural Products", Chapman and Hall/CRC Press, Taylor and Francis Group, z. B. in der online Ausführung von 2018: http://dnp.chemnetbase.com/.

Terpenderivate können synthetischer oder teilsynthetischer Natur sein oder auch als Naturstoff aus einem Lebewesen der Biosphäre oder einer anderen Quelle isoliert worden sein. Bevorzugt werden die Ausgangsstoffe aus Rückständen aus der Zelluloseproduktion gewonnen und dann synthetisch in die entsprechenden Lactame konvertiert.

Insbesondere sind alle Möglichkeiten, die sich aus den stereochemischen Definitionen der Taktizität ergeben eingeschlossen, z. B. isotaktisch, syndiotaktisch, heterotaktisch, hemiisotaktisch, ataktisch. Bevorzugt im Sinne der Erfindung sind Polyamide mit zumindest teilweiser taktischer Substituentenfolge.

Die bicyclischen Terpenlactame weisen mehrere Stereozentren auf.

Besonders bevorzugte bicyclische Terpenlactame weisen neben dem Lactamring einen Dreiring, Vierring oder Fünfring auf.

Die bicyclischen Terpenlactame werden bevorzugt aus entsprechenden bicyclischen Terpenketonen hergestellt.

Die bicyclischen Terpenketone werden bevorzugt aus entsprechenden bicyclischen, einfach ungesättigten Terpenen oder entsprechenden bicyclischen hydroxylierten Terpenen hergestellt. Besonders bevorzugt werden die Ketone aus den folgenden Vorläufermolekülen hergestellt:

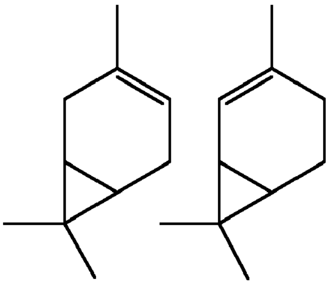

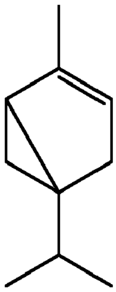

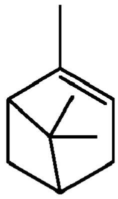

3

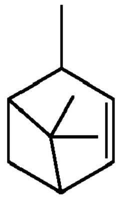

3'

1 1' 2

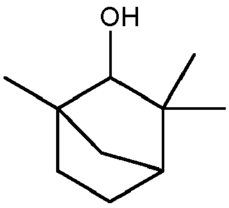

4

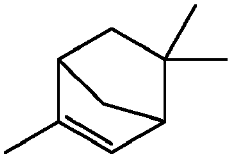

4'

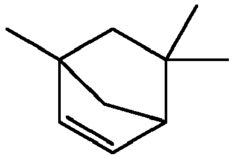

4''

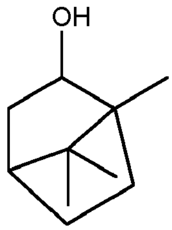

5

Besonders bevorzugte bicyclische Terpenketone sind:

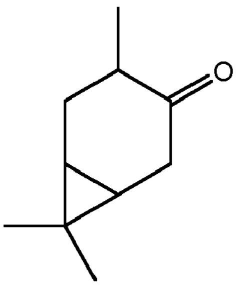

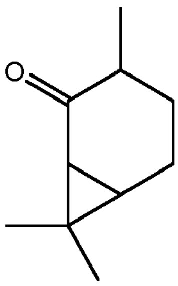

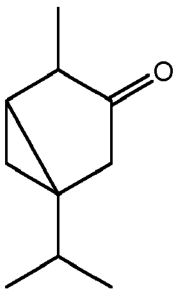

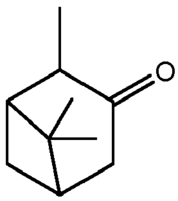

3a

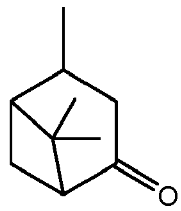

3'a

1a 1'a 2a

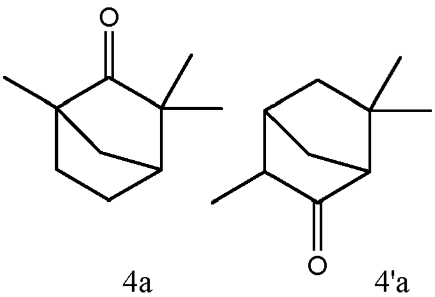

4a 4'a

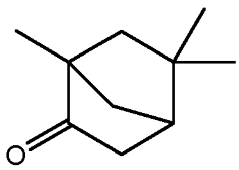

4''a

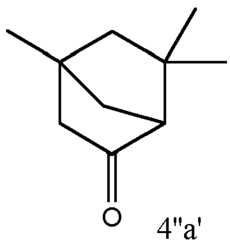

4''a'

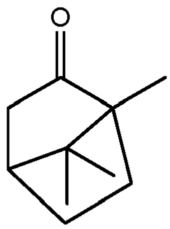

5a

Besonders bevorzugte bicyclische dreiring Terpenlactame sind:

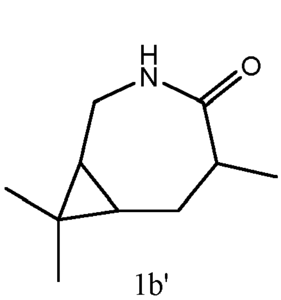
1b'
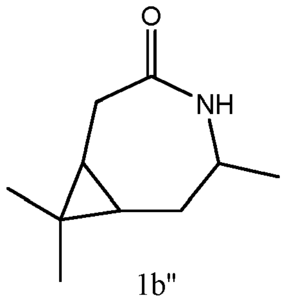
1b''
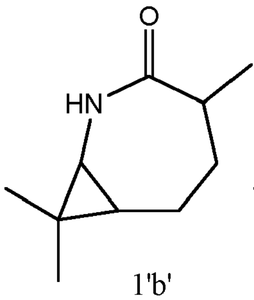
1'b'
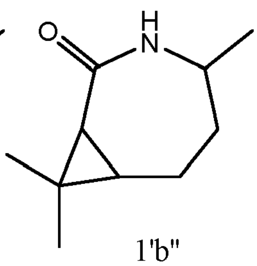
1'b''

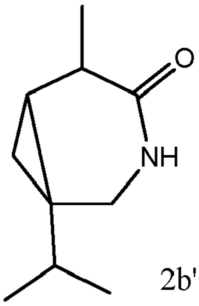
2b'
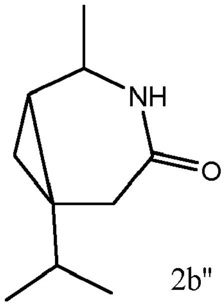
2b''

Besonders bevorzugte bicyclische vierring Terpenlactame sind:

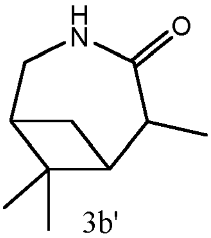
3b'
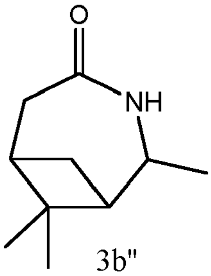
3b''
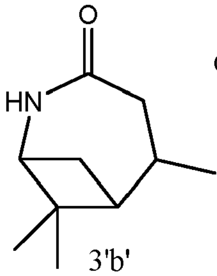
3'b'
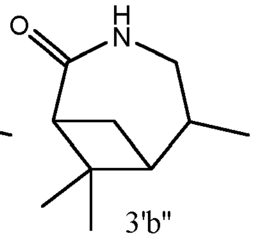
3'b''

Besonders bevorzugte bicyclische fünfring Terpenlactame sind:

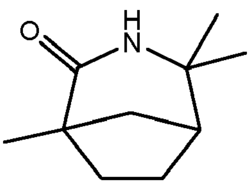
4b'
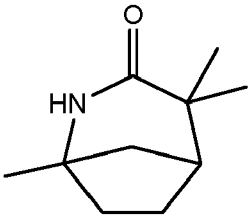
4b''
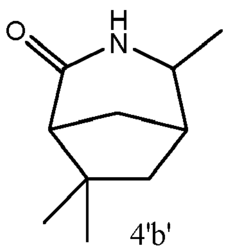
4'b'
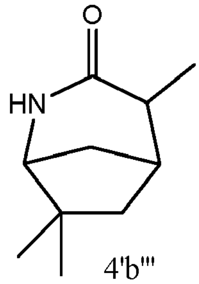
4'b'''

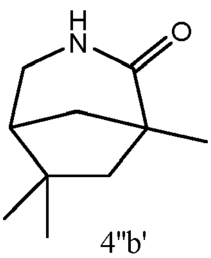
4''b'
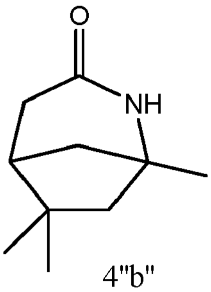
4''b''
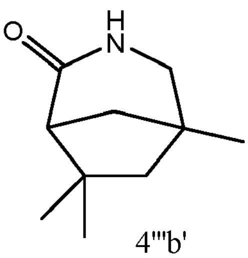
4'''b'
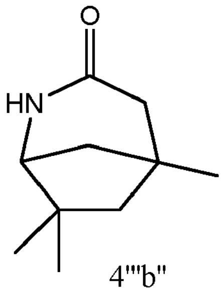
4'''b''

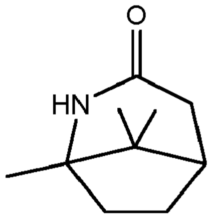

5b'

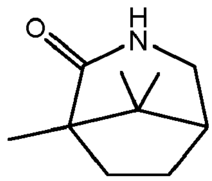

5b"

Insbesondere bevorzugte bicyclische Terpenlactame sind die der Formeln 1b', 1b", 1'b', 1'b", 3b', 3b", 3'b', 3'b", 5b' und 5b".

Bevorzugt werden im erfindungsgemäßen Verfahren keine Metall-Lactamate eingesetzt.

Bevorzugt werden im erfindungsgemäßen Verfahren keine N-Acyl-Lactame eingesetzt.

Insbesondere bevorzugt werden weder Metall-Lactamate noch N-Acyl-Lactame eingesetzt.

Bevorzugt findet in Schritt b) die Polymerisation aller in Schritt a) bereitgestellten Lactame und bifunktionellen Verbindungen statt. Mehr bevorzugt findet ein Umsatz von mindestens 95 %, bevorzugt mindestens 90 %, insbesondere bevorzug von mindestens 85 % statt. Der Umsatz wird über den Gehalt an Restmonomeren im erfindungsgemäßen Polyamid bestimmt.

Ein weiterer Gegenstand der vorliegenden Erfindung ist ein Polyamid hergestellt nach dem erfindungsgemäßen Verfahren.

Figur 1 beschreibt den Einfluss der Temperatur auf die zahlenmittlere molare Masse (Mn) bei einer Reaktionszeit von 6 h für ein Polyamid bestehend aus Substruktureinheiten, die vom Caren abgeleitet sind. Das Lactam bestand aus mindestens 95 mol-% aus 3R, 4S, 6R-Carenlactam.

Figur 2 beschreibt den Einfluss der Temperatur auf den Restmonomerengehalt bei einer Reaktionszeit von 6 h wie in Fig. 1 beschrieben.

Methoden

Differential Scanning Calorimetry (DSC):

Alle DSC-Messungen wurden auf dem Gerät MettlerToledo DSC1, wenn nicht anders beschrieben im offenen Aluminiumtiegel vermessen. Bei Polymeren wird eine Methode genutzt, bei der zweimal aufgeheizt wird. Zur Bestimmung der Glasübergangstemperatur wird nur die zweite Aufheizkurve betrachtet. In den Diagrammen wird die erste Aufheizkurve in schwarz, die Abkühlkurve in rot und die Kurve des zweiten Aufheizens in blau dargestellt. Bei Monomeren wird im Regelfall nur einmal aufgeheizt.

Kernspinresonanz (NMR):

Alle $^{1}$H-, $^{13}$C-{$^{1}$H}-, $^{13}$C-DEPT-135- und 2D-NMR-Spektren wurden auf dem Gerät Bruker Avance III HD 500 aufgenommen. Es werden verschiedene Lösemittel verwendet und die jeweiligen Resonanzen als Standard gelockt. Die Signalmultiplizitäten werden wie folgt abgekürzt: s: Singulett; d: Dublett; dd: Dublett vom Dublett; ddd: Dublett vom Dublett vom Dublett; t: Triplett; td: Triplett vom Dublett; tt: Triplett vom Triplett; q: Quartett; m: Multiplett. Die Zuordnung der quartären Kohlenstoffkerne, Methin-, Methylen- und Methylgruppen wurden unter Zuhilfenahme von $^{13}$C-DEPT-135-Spektren vorgenommen.

Relative Lösungsviskosität ($\eta$-rel-Wert):

Die Proben werden bei 30 °C in m-Kresol gelöst (0,005 g/ml) und bei 25,00 °C in einem Viskositäts-Messsystem (LAUDA PVS oder Schott AVS Pro) vermessen.

Gelpermeationschromatograpie (GPC):

Die GPC Analysen erfolgten mit einer modular aufgebauten Agilent Anlage. Hierzu gehören Pumpe, Autosampler und Säulenkombinationen (PSG-Säulen). Als Detektoren wurden RI-Detektoren eingesetzt. Die Proben werden mit einer Konzentration von c = 5 g/l in Hexafluoroisopropanol (HFIP) unter Zusatz von 0,05 mol/l Kaliumtrifluoroacetat

gelöst. Die Messungen werden mit HFIP und 0,05 mol/l Kaliumtrifluoroacetat bei einer Flussrate von 0,8 ml/min mit RI-Detektion gefahren, Kalibrierung erfolgte gegen 12 eng verteilte PMMA-Standards ($M_p$ zwischen 505 g/mol und $4*10^6$ g/mol).

Die alkalimetrische Bestimmung der Carboxylendgruppen erfolgte in Benzylalkohol und die der Aminoendgruppen erfolgte in m-Kresol bei 100 °C mit dem Gerät 809 Titrando, Methrom.

Da die Zahl der Endgruppen invers proportional zu der Länge der Ketten ist, lässt sich aus der Bestimmung der Endgruppen eine Abschätzung über die Molmasse bestimmen. Die Angabe der Endgruppen erfolgt in mmol/kg. Aus diesen Werten. Die zahlenmittlere molare Masse wird nach der folgenden Formel berechnet.

$$M_n = \frac{2 * 10^6}{Aminoendgruppen\left[\frac{mmol}{kg}\right] + Carboxylendgruppen\left[\frac{mmol}{kg}\right]}$$

Gaschromatographische Analyse (GC) zur Bestimmung des Monomerengehaltes:

Die Durchführung der gaschromatographischen Analyse erfolgte auf einem Doppelsäulensystem mit zwei Trennsäulen unterschiedlicher Polarität. Die Proben werden, wenn nicht anders beschrieben, in Toluol gelöst. Zur Detektion wurde ein Flammenionisationsdetektor (FID) genutzt. Die Auswertung der gaschromatographisch erfassbaren Anteile erfolgte durch Normierung auf 100 Flächen-%.

Gaschromatographie mit Massenspektrometrie-Kopplung (GC-MS):

Die GS-MS Messungen werden auf dem Gerät Agilent GC 7890/ Agilent MSD 5977 durchgeführt.

Die Trennung der GC/FID-Analyse wurde auf einer vergleichbaren Säule an einem GC-System mit massenspektrometrischer Detektion (GCMS) nachgestellt. Die Signale wurden vergleichbar zu der GC/FID-Analyse chromatographisch erfasst. Die Ionisation erfolgte durch eine Elektronenstroßionisation.

Beispiel 1: Allgemeine Arbeitsvorschrift zur Polymerisation von Carenlactam

In einem dickwandigen Reagenzglas wurden 10 g (0,0598 mol) Carenlactam vorgelegt. Es wurden 30 Gew.-% Wasser (4,3 ml), 57 ppm $H_2PO_3$ und wenn genannt das Salz aus PACM20 und DDS hinzugegeben. Das Reagenzglas wurde in ein Stahlbombenrohr mit Manometer gegeben. Die Apparatur wurde dicht verschlossen und es wurde für 15 min Stickstoff übergeleitet. Zur Dichteprüfung wurde anschließend bei einem Stickstoffdruck von 1 bar verschlossen und für 5 min beobachtet, ob der Druck stabil blieb. Das dicht verschlossene Stahlbombenrohr wurde in ein Metallbad mit Woodschem Metall gegeben und in 30 min auf die Reaktionstemperatur erhitzt. Die Temperatur und der Druck wurden für die Hälfte der Reaktionszeit gehalten. Nach dieser Zeit wurde die Apparatur in 30 min auf Normaldruck entspannt und es wurde Stickstoff übergeleitet, die Temperatur wurde für die restliche Reaktionszeit gehalten. Anschließend wurde das Stahlbombenrohr aus dem Metallbad genommen und über Nacht bei Raumtemperatur und im Stickstoffstrom stehen gelassen.

| Nr. | Reaktionsbedingungen | | | Analytik | | |
|---|---|---|---|---|---|---|
| | T [°C] | Reaktionszeit [h] | MM [mol-%] | Tg [°C] | Mn [g/mol] | M-Anteil [%] |
| C28 | 270 | 8,5 | 10 | 103 | 6400 | 17,69 |
| C29 | 250 | 5 | 10 | 110 | 11900 | 13,38 |
| C30 | 250 | 6 | 10 | 114 | 10900 | 13,99 |
| C16 | 270 | 8,5 | 0 | 97 | 6600 | 20,56 |
| C5 | 250 | 5 | 0 | 101 | 9300 | 19,41 |
| C6 | 250 | 6 | 0 | 108 | 9900 | 19,36 |
| C7 | 250 | 7,5 | 0 | 112 | 10400 | |
| C8 | 250 | 8,5 | 0 | 106 | 6700 | |
| C13 | 270 | 5 | 0 | | 5800 | |
| C14 | 270 | 6 | 0 | | 7400 | |
| C16 | 270 | 8,5 | 0 | | 6600 | |

(fortgesetzt)

| Nr. | Reaktionsbedingungen | | | Analytik | | |
|---|---|---|---|---|---|---|
| | T [°C] | Reaktionszeit [h] | MM [mol-%] | Tg [°C] | Mn [g/mol] | M-Anteil [%] |
| C17 | 270 | 9,5 | 0 | | 4000 | |
| C18 | 270 | 24 | 0 | | 3200 | |

Der Vergleich der Experimente C28, C29 und C30 mit den analogen Experimenten ohne Mediatorzugabe C16, C5 und C6 zeigt einen deutlich geringeren Anteil an Restmonomeren. Vorteilhaft ist auch, dass bei Reaktionszeiten von 5 und 6 Stunden die Molmassen durch die Zugabe des Mediators ansteigen.

Die Glasübergangstemperaturen korrelieren mit den Molmassen.

Der Vergleich der Reaktionszeiten zeigt, dass bei gleicher Temperatur die molare Masse mit steigender Reaktionszeit plötzlich abfällt. Das zeitliche Optimum der Reaktionszeit sinkt mit steigender Reaktionstemperatur.

Beispiel 2: Allgemeine Arbeitsvorschrift zur Polymerisation von Pinenlactam

In einem dickwandigen Reagenzglas wuren 10 g (0,0598 mol) Pinenlactam vorgelegt. Es werden 35 Gew.-% Wasser (5,4 ml), 57 ppm $H_2PO_3$ und der Mediator (entsprechend den Angaben in Tabelle #10) hinzugegeben und das Reagenzglas in ein Stahlbombenrohr mit Manometer gegeben. Es wurde für 15 min Stickstoff übergeleitet. Zur Dichteprüfung erfolgt wie in Beispiel 1 beschrieben. Die Erhitzung auf Reaktionstemperatur wurde wie in Beispiel 1 beschrieben durchgeführt. Die Temperatur und der Druck wurden für 2,5 h gehalten. Nach dieser Zeit wurde die Apparatur in 30 min entspannt und es wurde Stickstoff übergeleitet, die Temperatur wurde für weitere 3 h bei einem Stickstoffstrom gehalten. Anschließend wurde das Stahlbombenrohr aus dem Metallbad genommen und über Nacht bei Raumtemperatur und Stickstoffstrom stehen gelassen.

Es konnten ohne Zusatz von Mediatoren keine Umsätze zu Polymeren detektiert werden, weder NMR-spektroskopisch noch IR-spektroskopisch.

Die Salze als Mediatoren wurden durch Erhitzen äquimolarer Mengen Diamin mit Disäure in Ethanol hergestellt, ggf wurde etwas Lösemittel abdestilliert und das Wasser azeotrop entfernt.

Tabelle #10: Reaktionsbedingungen und Analysenergebnisse des Beispiels 2, T = Temperatur, MM = Mediatormenge in mol-% bezogen auf die eingesetzte Menge Pinenlactam, M-Anteil = Monomerenanteil (Restmonomerengehalt)

| Nr. | Reaktionsbedingungen | | | Analytik | | | |
|---|---|---|---|---|---|---|---|
| | T [°C] | Mediator | MM [mol-%] | η-rel | Tg [°C] | Mn [g/mol] | M-Anteil [%] |
| P2 | 260 | PACM20/DDS | 5 | | | | |
| P3 | 280 | PACM20/DDS | 10 | | | | |
| P4 | 270 | PACM20/DDS | 10 | | | | |
| P5 | 260 | PACM20/DDS | 10 | 1,2 | 344 | 4500 | 5,48 |
| P6 | 260 | PACM20/DDS | 15 | | | | |
| P7 | 260 | 12-ADS | 10 | 1,1 | 309 | 3700 | 8,80 |
| P8 | 260 | 12-ADS | 15 | | | | |
| P9 | 260 | AH | 10 | 1,1 | 326 | 3900 | 8,01 |

PACM20: 4,4’-Methylenbis(cyclohexylamin) mit ca. 20% trans-trans-Anteil
DDS: 1, 12-Dodecandisäure
12-ADS: 12-Aminododecansäure, Aminolaurylsäure
AH: Hexamethylendiamin + Adipinsäure

Beispiel 2 zeigt im Falle der Verwendung von Pinenlactam als Monomer die Notwendigkeit der Verwendung eines Mediators.

Weiterhin zeigt sich, dass der sterisch anspruchsvollste Mediator die besten Ergebnisse erzielt.

Die Glasübergangstemperatur ist für Polyamide ungewöhnlich hoch.

**Patentansprüche**

1. Polyamide enthaltend mindestens 10 Gew.-% mindestens einer cyclischen terpenoiden Substruktur, wobei die Substruktur bevorzugt von einem Monoterpen abgeleitet ist.

2. Polyamide nach Anspruch 1 **dadurch gekennzeichnet, dass** sie 1 bis 1000 ppm einer Phosphor enthaltenden Komponente aufweisen.

3. Polyamide nach Anspruch 1 oder 2 **dadurch gekennzeichnet, dass** sie einen Restmonomerengehalt von 3 bis 20 Gew-% der Gesamtmasse der Polyamide aufweisen.

4. Polyamide nach einem der Ansprüche 1 bis 3 **dadurch gekennzeichnet, dass** sie in ihrer cyclischen terpenoiden Substruktur dreigliedrige, viergliedrige und / oder fünfgliedrige Ringe aufweisen.

5. Polyamide nach einem der Ansprüche 1 bis 4 **dadurch gekennzeichnet, dass** die cyclische terpenoide Substruktur einen Ring mit zwei geminale Methylgruppen aufweist.

6. Verfahren zur Herstellung der Polyamide nach einem der Ansprüche 1 bis 5, welches die folgenden Schritte umfasst:

   a) Bereitstellen mindestens eines bicyclischen Terpenlactams,
   b) Polymerisieren des mindestens einen bicyclischen Terpenlactams unter Ringöffnung, sodass ein Polyamid, bevorzugt ein Homopolyamid oder ein Copolyamid, erhalten wird.

7. Verfahren nach Anspruch 6 **dadurch gekennzeichnet, dass** in Schritt b) eine Phosphor-haltige Säure eingesetzt wird.

8. Verfahren nach einem der Ansprüche 6 oder 7 **dadurch gekennzeichnet, dass** die Reaktionstemperatur 270 °C nicht übersteigt.

9. Verfahren nach einem der Ansprüche 6 bis 8 **dadurch gekennzeichnet, dass** ein Mediator ausgewählt aus einem Nylonsalz oder einer $\alpha,\omega$-Aminosäure als intramolekulares Salz eingesetzt wird.

10. Formmassen enthaltend 10 bis 90 Gew.-% mindestens eines Polyamids nach mindestens einem der Ansprüche 1 bis 5 oder eines Verfahrensproduktes nach einem der Ansprüche 6 bis 9.

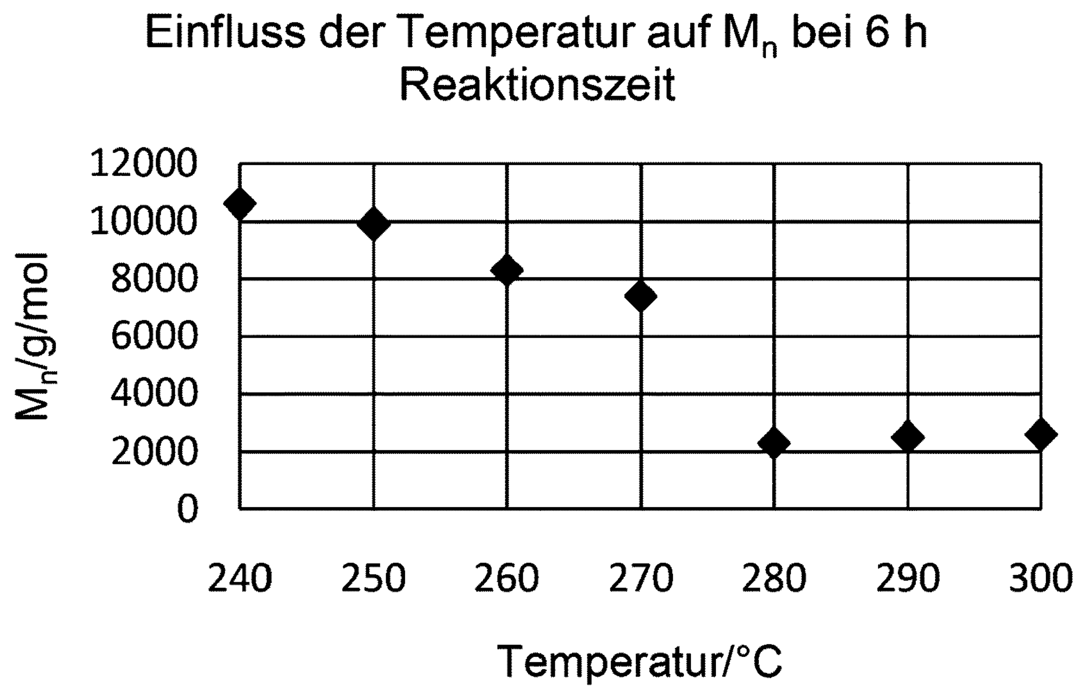
Einfluss der Temperatur auf Mn bei 6 h Reaktionszeit
12000
10000
8000
6000
4000
2000
0
Mn/g/mol
240
250
260
270
280
290
300
Temperatur/°C

Fig. 1

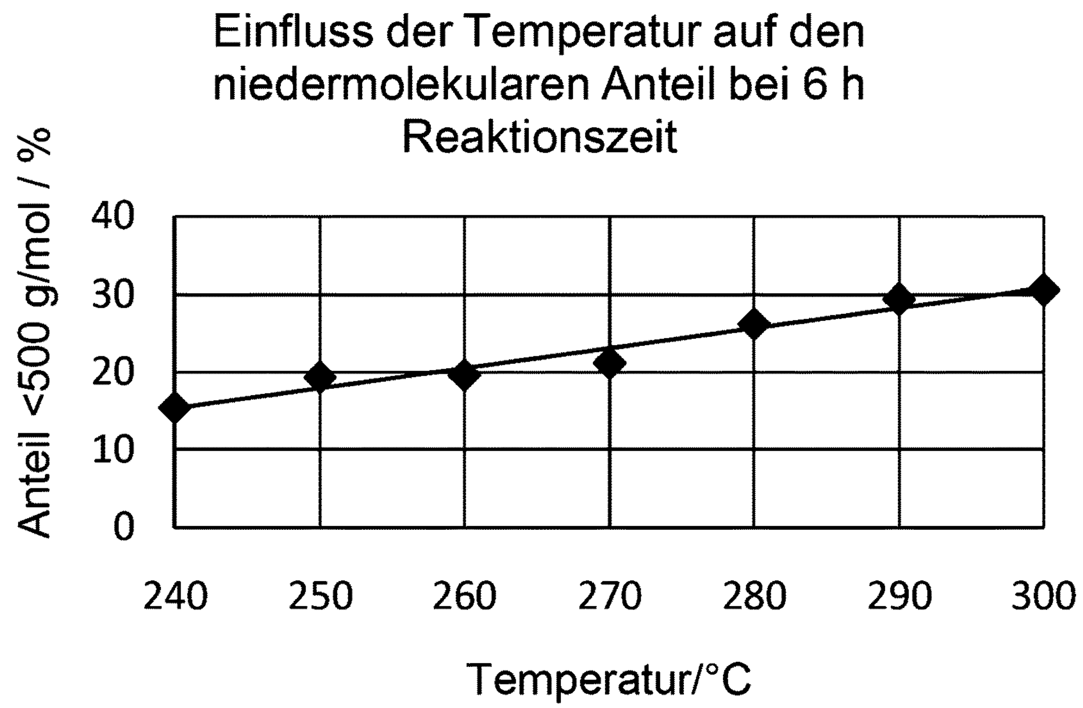
Einfluss der Temperatur auf den niedermolekularen Anteil bei 6 h Reaktionszeit
40
30
20
10
0
Anteil <500 g/mol / %
240
250
260
270
280
290
300
Temperatur/°C

Europäisches Patentamt
European Patent Office
Office européen des brevets

# EUROPÄISCHER RECHERCHENBERICHT

Nummer der Anmeldung
EP 19 17 5334

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | MALTE WINNACKER ET AL: "Sustainable, Stereoregular, and Optically Active Polyamides via Cationic Polymerization of [epsilon]-Lactams Derived from the Terpene [beta]-Pinene", MACROMOLECULAR RAPID COMMUNICATIONS, Bd. 38, Nr. 9, 8. März 2017 (2017-03-08), Seite 1600787, XP055640302, DE ISSN: 1022-1336, DOI: 10.1002/marc.201600787 * Zusammenfassung * * Abbildung 1 * * Seite 2, rechte Spalte, Zeile 40 - Zeile 47 * | 1-10 | INV. C08G69/14 C08G69/36 B29C45/00 |
| X,D | DE 10 2014 221061 A1 (FRAUNHOFER GES ZUR FÖRDERUNG DER ANGEWANDTEN FORSCHUNG E V [DE]) 21. April 2016 (2016-04-21) | 1-8,10 | |
| A | * Beispiel 2 * * Absatz [0057] * * Ansprüche 1-13 * | 9 | |
| X | PAUL N. STOCKMANN ET AL: "New Bio-Polyamides from Terpenes: [alpha]-Pinene and (+)-3-Carene as Valuable Resources for Lactam Production", MACROMOLECULAR RAPID COMMUNICATIONS, 20. März 2019 (2019-03-20), Seite 1800903, XP055591635, DE ISSN: 1022-1336, DOI: 10.1002/marc.201800903 | 1-8,10 | |
| A | * Tabelle 2 * * Zusammenfassung * | 9 | |

-/--

RECHERCHIERTE SACHGEBIETE (IPC)

C08G
B29C

Der vorliegende Recherchenbericht wurde für alle Patentansprüche erstellt

1

| Recherchenort | Abschlußdatum der Recherche | Prüfer |
|---|---|---|
| München | 8. November 2019 | Laudi, Ines |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

Europäisches Patentamt
European Patent Office
Office européen des brevets

# EUROPÄISCHER RECHERCHENBERICHT

Nummer der Anmeldung
EP 19 17 5334

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X<br><br>A | CN 107 129 572 A (UNIV NANJING TECH)<br>5. September 2017 (2017-09-05)<br>* Absatz [0009] *<br>* Beispiel 1 *<br>* Ansprüche 1-13 *<br>----- | 1-8,10<br><br>9 | |
| X<br><br><br><br><br><br><br><br><br>A | MALTE WINNACKER ET AL: "Sustainable terpene-based polyamides via anionic polymerization of a pinene-derived lactam",<br>CHEMICAL COMMUNICATIONS,<br>Bd. 54, Nr. 7, 1. Januar 2018 (2018-01-01), Seiten 841-844, XP055640314,<br>UK<br>ISSN: 1359-7345, DOI: 10.1039/C7CC08266E<br>* Abbildung 1 *<br>* Zusammenfassung *<br>----- | 1-8,10<br><br><br><br><br><br><br><br><br>9 | |
| | | | RECHERCHIERTE SACHGEBIETE (IPC) |

Der vorliegende Recherchenbericht wurde für alle Patentansprüche erstellt

1

| Recherchenort | Abschlußdatum der Recherche | Prüfer |
|---|---|---|
| München | 8. November 2019 | Laudi, Ines |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
.......................................................
& : Mitglied der gleichen Patentfamilie, übereinstimmendes Dokument

EPO FORM 1503 03.82 (P04C03)

## ANHANG ZUM EUROPÄISCHEN RECHERCHENBERICHT ÜBER DIE EUROPÄISCHE PATENTANMELDUNG NR. EP 19 17 5334

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

08-11-2019

| Im Recherchenbericht angeführtes Patentdokument | Datum der Veröffentlichung | Mitglied(er) der Patentfamilie | Datum der Veröffentlichung |
|---|---|---|---|
| DE 102014221061 A1 | 21-04-2016 | CH 710304 A2<br>DE 102014221061 A1 | 29-04-2016<br>21-04-2016 |
| CN 107129572 A | 05-09-2017 | KEINE | |

EPO FORM P0461

Für nähere Einzelheiten zu diesem Anhang : siehe Amtsblatt des Europäischen Patentamts, Nr.12/82

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- DE 102014221061 A1


### In der Beschreibung aufgeführte Nicht-Patentliteratur


- **KUMAR.** *Med. Chem. Res.,* 2012, 531
- **R. E. GAWLEY.** *Org. React.,* 1988, vol. 35, 1
- **LOCHINSKI et al.** *Tetrahedron: Asymmetry,* 2000, vol. 11, 1295
- *Macromol. Chem. Phys.,* 2014, vol. 215, 1654-1660
- Reinhold Plastics Applications Series: Polyaminde Resins. 1966, 59, , 60
- Dictionary of Natural Products. Chapman and Hall/CRC Press, Taylor and Francis Group